# EUROPEAN PATENT SPECIFICATION

(11) **EP 1 960 949 B1**
(45) Date of publication and mention of the grant of the patent: **04.11.2009**
(21) Application number: 06789344.6
(22) Date of filing: 02.08.2006
(51) Int. Cl.: G06Q 10/00, G06F 17/30, H04L 29/08

(54) **PARTICIPANT-SELECTIVE EVENT SYNCHRONIZATION FOR PORTABLE ELECTRONIC DEVICES**
TEILNEHMERSELEKTIVE EREIGNISSYNCHRONISATION FÜR TRAGBARE ELEKTRONISCHE GERÄTE
SYNCHRONISATION D'EVENEMENTS SELECTIONNABLES PAR L'UTILISATEUR POUR DISPOSITIF ELECTRONIQUES PORTATIFS

(30) Priority: 14.12.2005 US 302718
(43) Date of publication of application: 27.08.2008
(73) Proprietor: Sony Ericsson Mobile Communications AB, 221 88 Lund (SE)
(72) Inventor: KIMBRELL, Jacob Warren, Raleigh, North Carolina 27613 (US)
(74) Representative: Clarke, Alison Clare
(86) International application number: PCT/US2006/030334
(87) International publication number: WO 2007/070119

(56) References cited:
- WO-A-2004/083981
- WO-A2-02/097572
- US-A1- 2005 239 483

## Description

### BACKGROUND OF THE INVENTION

The present invention relates to portable electronic devices and, more particularly, to synchronizing event data for portable electronic devices.

Portable electronic devices, such as personal digital assistants (PDAs), mobile terminals (e.g., cell phones), media players (e.g., iPod^{®}), and notebook or laptop computers, commonly include personal organizers that manage an event database used for purposes such as appointment or task scheduling. These devices typically are designed to "sync" with other devices so that, for example, appointment information stored in an event database maintained by one device, such as a desktop personal computer (PC), can be downloaded to create a corresponding entry in the event database in the portable device. WO 2004 /083 981 discloses a personal calendar system.

Groups of people often operate according to a common calendar. For example, a business may maintain a common electronic calendar that includes entries for multiple employees. An employee may be able to sync the calendar of his or her portable electronic device to such a common calendar. However, syncing may result in populating the employee's calendar with entries of little or no interest to the employee. This problem may be addressed by creating separate common calendars for workgroups or other subpopulations, but creating and maintaining such separate calendars may require additional labor and/or may introduce errors.

### SUMMARY OF THE INVENTION

Some embodiments of the present invention provide methods, computer apparatus and computer program products for synchronizing event information for a portable electronic device, such as a mobile terminal, media player or personal digital assistant. An association between an identifier and the portable electronic device is established. An event database, for example, an event database maintained at a desktop or other computer, is searched to identify an event entry having a participant field value corresponding to the identifier associated with the portable electronic device. Data of the identified event entry is electronically transmitted to the portable electronic device, which may create an event entry in its event database responsive to the transmitted data. The participant field value may include, for example, a value of an attendee field and/or an organizer field. For example, the participant field value may be a uniform resource locator (URL).

Establishment of an association between an identifier and the portable electronic device may include receiving the identifier from the portable electronic device over a communications link. The identifier associated with the portable electronic device may include a device identifier and/or an event entry participant identifier received from the portable electronic device. Searching of the event database may be preceded by establishing a correspondence between the identifier and a participant field value, for example, using a lookup table or other cross-reference. A correspondence between the identifier and a participant field value may be established responsive to a user input at the portable electronic device and/or a user input at an second electronic device that provides access to the second event database. A single identifier may correspond to a plurality of participant field values.

Further embodiments provide portable electronic devices, along with methods and computer program products for operating the same. An identifier associated with an event entry participant is transmitted to a second electronic device that provides access to a first event database. Event data transmitted from the second electronic device in response to the transmitted identifier is received at the portable electronic device and, in response, an event entry is created in a second event database at the portable electronic device. Transmission of the identifier associated with an event entry participant may be preceded by establishing an association between the identifier and the event entry participant responsive to a user input at the portable electronic device. The identifier may include a device identifier and/or respective identifiers for respective ones of a plurality of event entry participants.

### BRIEF DESCRIPTION OF THE DRAWINGS

FIG. 1 is a schematic block diagram illustrating apparatus and operations for participant-selective synchronization of event information for a portable electronic device according to some embodiments of the present invention.

FIGs. 2-5 are flowcharts illustrating operations for synchronizing event information for portable electronic devices according to various embodiments of the present invention.

### DETAILED DESCRIPTION OF EXEMPLARY EMBODIMENTS

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention may be embodied as methods, apparatus, and computer program products. Accordingly, the present invention may be embodied in hardware, software or combinations thereof. For example, the present invention may take the form of a computer program product on a computer-usable storage medium having computer-usable program code embodied in the medium. Applicable storage media include, but are not limited to, hard disks, CD-ROMs, optical storage devices and magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language and/or a lower level assembler language. The program code may execute entirely on one device or on multiple devices.

Exemplary embodiments of the present invention are described herein with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowchart and schematic diagrams of herein illustrate the architecture, functionality, and operations of some embodiments of the present invention. In this regard, each block may represent a module, segment, or portion of code, which includes one or more executable instructions for implementing the specified logical function(s). It should also be noted that in other implementations, the function(s) noted in the blocks may occur out of the order noted in the figures. For example, two blocks shown in succession may, in fact, be executed substantially concurrently or the blocks may sometimes be executed in the reverse order, depending on the functionality involved.

Some embodiments of the present invention arise from a realization that selective synchronization of an event database of a portable electronic device, such mobile terminal or PDA, may be achieved by associating the portable electronic device with one or more values for participant identifier fields of event entries stored in another event database, such as one stored in a desktop computer or other device with which the portable device may be synced. For example, in some embodiments, a device identifier of a portable device may be associated with one or more "attendee" and/or "organizer" fields in event entries stored in an event database maintained by computer, such as a desktop PC. Such an association may be established, for example, in response to a user entry at the desktop PC and/or in response to user inputs at the portable electronic device. In other embodiments, participant identifiers, such as "mailto" uniform resource locators (URLs), may be transmitted from a portable device to create the desired association.

As used herein, "event database" refers to any of a number of different types of databases for storing information about events, such as appointments, tasks, notes, or the like. Examples include event databases for storing appointments and tasks in a personal information manager (PIM), such as Outlook.^{®} A "participant identifier" includes any identifier, such as "organizer," "attendee" or "resource," used to identify participants, such as actual persons, "virtual persons" (e.g., "users") or resources, in entries in such a database. Participant identifiers may include, for example, usernames/passwords, uniform resource locators (URLs), or the like.

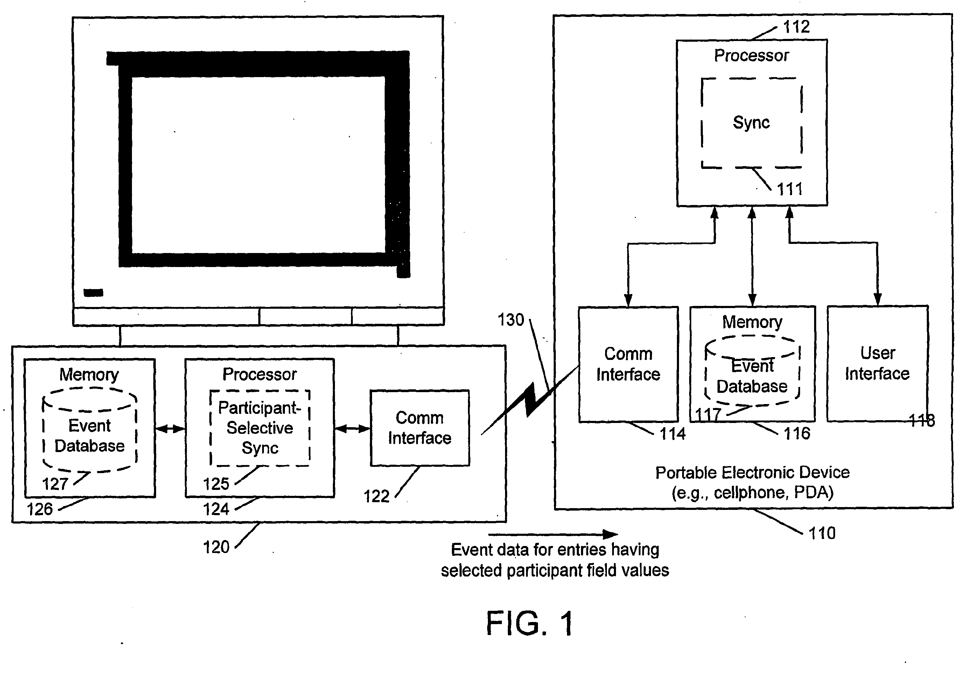

In some embodiments of the present invention illustrated in FIG. 1, a computer 120 (e.g., a desktop, laptop or notebook PC) is configured to support participant-selective synchronization of event information for a portable electronic device 110 (e.g. a mobile terminal or PDA). As shown, the portable electronic device 110 includes a processor 112, operatively coupled to a communications interface circuit 114, a memory 116, and user interface circuitry 118. It will be appreciated that the communications interface circuit 112 may be configured to support any of a variety of types of communications, including wired, radio, and optical communications. For example, the communications interface circuit 112 may support commonly used communications standards such as universal serial bus (USB), FireWire (IEEE 1394), WiFi (IEEE 802.11), or Bluetooth. The user interface circuitry 118 may include any of a number of different types of circuitry, including, but not limited to, display, speaker, keypad, mouse, touchpad, clickwheel, and the like. The memory 116 may include any of a number of different storage media, including, but not limited to, semiconductor memory (e.g., RAM or ROM) and magnetic memory (e.g., hard disk). In the illustrated embodiments, the memory 116 stores an event database 117, which is accessed by an event sync application 111 executing on the processor 112.

The computer 120 includes a processor 124, which is operatively coupled to a communications interface circuit 122 and a memory 126. The communications interface circuit 122 supports establishment of a communications link 130, for example, a wired or wireless communications link, with the communications interface circuit 114 of the portable electronic device 110. As shown, the memory 126 stores an event database 127, for example, an Outlook^{®} or other organizer database that includes event data. The event database 127 is accessed by a participant-selective sync application 125 executing on the processor 124. It will be appreciated that, although the event database 127 is shown resident at the computer 120, in other embodiments of the present invention, the event database that is synced to may be stored in any of a number of different locations, e.g., a location that may be linked to the syncing computer 120 via a network. For example, an event database on the computer 120 may include a link to another, remotely located database, as might be the case, for example, when syncing to an online virtual calendar.

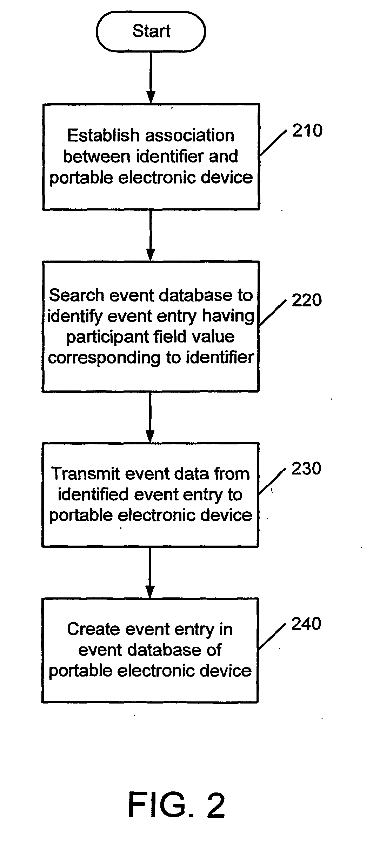

The participant-selective sync application 125 is configured to support selective participant-based extraction of data in event entries stored in the event database 127 and transmission of the extracted event data to the portable electronic device 110, where it may be stored in the event database 117 under the control of the event sync application 113. For example, referring now to the flowchart of FIG. 2, in some embodiments of the present invention, an association may be established between an identifier and a portable electronic device, for example, the device 110 of FIG. 1 (block 210). An event database, for example, the database 127 maintained at the computer 120 of FIG. 1, is searched to identify one or more event entries having participant field values corresponding to the identifier (block 220). Responsive to the search, event data from an identified event entry may be transmitted to the portable device (block 230). An event entry may be created in an event database of the portable device responsive to the transmitted event data (block 240). It will be appreciated that creation of an event entry may include creation of a wholly new entry or modification of an existing entry.

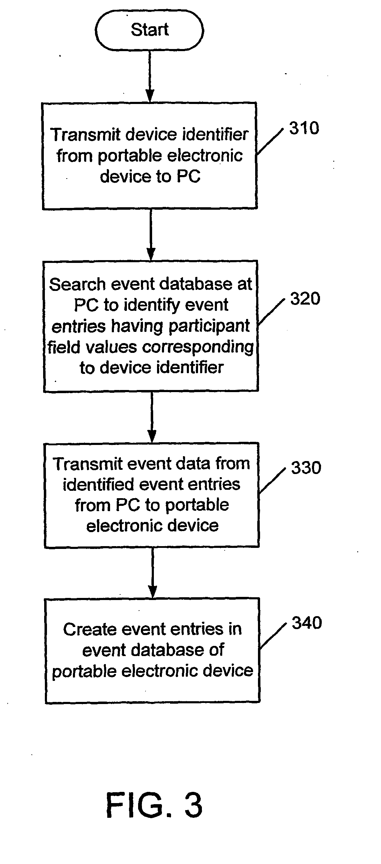

It ill be appreciated that participant-selective synchronization of event data in a portable electronic device along the lines described above may be achieved in many different ways within the scope of the present invention. Some examples of participant-selective event synchronization are discussed below with reference to the flowcharts of FIGs. 3-5.

According to some embodiments of the present invention, an association between a portable electronic device and one or more event entry participants may be established by transmitting an identifier from the portable electronic device to a device, such as a desktop PC, that provides access to an event database to which the portable device is to be synced. For example, as shown in FIG. 3, a device identifier may be transmitted from a portable electronic device to a PC (block 310). The device identifier may include any of a number of different identifiers, such as a serial number, username, password or combination thereof. Responsive to the transmission, the PC may search its event database to identify event entries that have participant field values that correspond to the device identifier (block 320). The correspondence may be established in a number of different ways, such as by use of a lookup table that cross-references the device identifier to one or more participant field values. Responsive to the search, the PC may transmit event data from the identified event entries to the portable electronic device (block 330), which may, in turn, use the transmitted data to create event entries in its own event database (block 340).

In further embodiments of the present invention, participant fields in event entries of an event database may correspond to standard "Attendee" and/or "Organizer" fields supported under the Internet Calendaring and Scheduling Core Object Specification (referred to herein as "iCalendar") and used under synchronization protocols, such as SyncML. Such participant-selective syncing of event data may be achieved by searching for event entries that have the appropriate "Attendee(s)" and/or "Organizer," which, in SyncML 1.0.1, are "mailto" uniform resource locators (URLs).

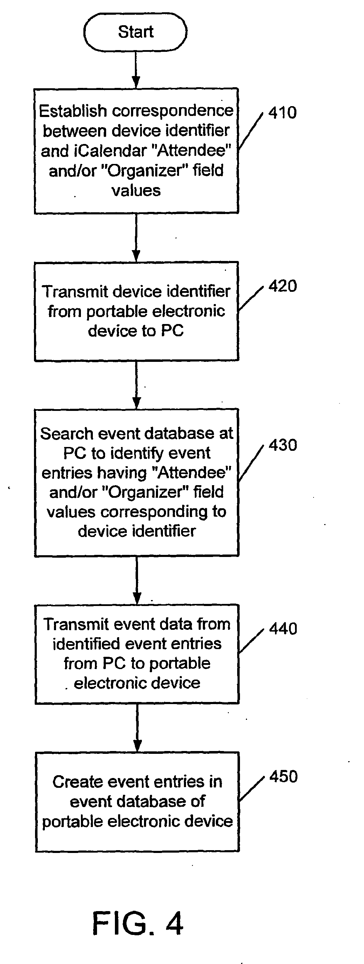

Referring to FIG. 4, a correspondence may be established between a device identifier for a portable electronic device and one or more "Attendee" and/or "Organizer" field values, i.e., URLs (block 410). The correspondence may be established in a number of different ways, for example, by a cross-reference in a lookup table. The device identifier may be transmitted from the portable electronic device to a device, for example, a PC, supporting an event database (block 420). In response, the event database is searched for entries having "Attendee" and/or "Organizer" values corresponding to the transmitted device identifier (block 430). Event data from identified entries may be transmitted back to the portable electronic device (block 440), which may, in turn, create event entries responsive to the transmitted event data (block 450).

The portable electronic device may perform other operations with the transmitted event data. For example, if the "Attendee" and/or "Organizer" information is included in the transmitted event data, the portable electronic device could generate address book/contact entries and/or transmit electronic messages (e.g., email, text or MMS messages) using the transmitted information.

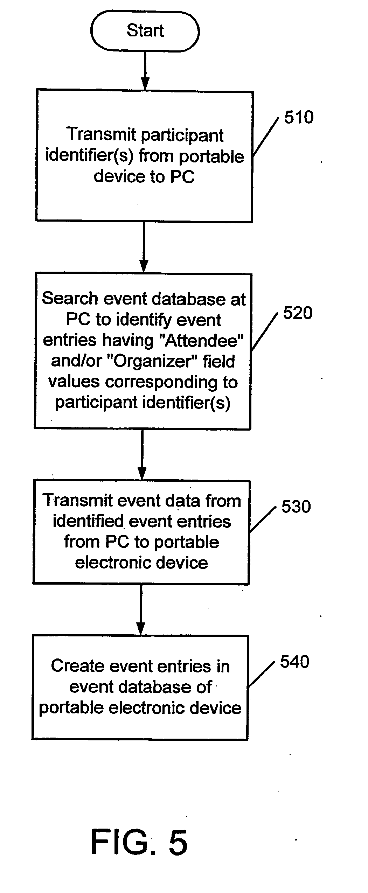

In additional embodiments of the present invention, a correspondence between a portable electronic device and participant identifiers may be created by transmitting the participant identifiers from the portable electronic device. For example, as shown in FIG. 5, a portable electronic device could transmit one or more participant identifiers, for example, usernames or URLs, to a PC or other device that accesses an event database (block 510). In response, the event database is searched to identify entries that have "Attendee" and/or "Organizer" fields that have corresponding values (block 520). Event data from the identified entries may transmitted to the portable electronic device (block 530), which may, in turn, create entries in its event database based on the transmitted event data (block 540).

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A computer-implemented method of synchronizing event information for a portable electronic device, the method comprising:
establishing an association between an identifier and the portable electronic device;
searching only participant fields of event entries in an event database that comprises respective event entries for respective events to identify an event entry having a participant field value corresponding to the identifier associated with the portable electronic device; and
electronically transmitting data of the identified event entry to the portable electronic device.

2. The method of Claim 1, wherein the participant field value comprises a value of an attendee field and/or an organizer field and/or a uniform resource locator (URL).

3. The method of Claim 1, wherein establishing an association between an identifier and the portable electronic device comprises receiving the identifier from the portable electronic device over a communications link.

4. The method of Claim 1, wherein the identifier associated with the portable electronic device comprises a device identifier and/or an event entry participant identifier received from the portable electronic device.

5. The method of Claim 1, further comprising creating an event entry in the event database of the portable electronic device responsive to the transmitted data.

6. The method of Claim 1, wherein searching an event database comprising respective event entries for respective events to identify an event entry having a participant field value corresponding to the identifier associated with the portable electronic device is preceded by establishing a correspondence between the identifier and a participant field value.

7. The method of Claim 6, wherein establishing a correspondence between the identifier and a participant field value comprises establishing the correspondence between the identifier and a participant field value responsive to a user input at the portable electronic device and/or a user input at an second electronic device that provides access to the second event database.

8. The method of Claim 6, wherein establishing a correspondence between the identifier and a participant field value comprises establishing a correspondence between a single identifier and a plurality of participant field values.

9. The method of Claim 1:
wherein electronically transmitting data of the identified event entry to the portable electronic device is preceded by establishing a communications link between the portable electronic device and a second electronic device; and
wherein electronically transmitting data of the identified event entry to the portable electronic device comprises electronically transmitting data of the identified event entry from the second electronic device to the portable electronic device over the communications link.

10. The method of Claim 1, wherein the portable electronic device comprises a mobile terminal, a media player and/or a personal digital assistant.

11. A computer configured to carry out the method of Claim 1.

12. A computer program product for synchronizing event information for a portable electronic device, the computer program product comprising computer program code embodied in a computer readable medium, the computer program code comprising program code configured to carry out the method of Claim 1.

13. A method of operating a portable electronic device, the method comprising:
transmitting an identifier associated with the portable electronic device to a second electronic device that provides access to a first event database that comprises respective event entries for respective events, the identifier configured for comparison to only participant field values included in event entries in the first event database;
receiving event data transmitted from the second electronic device in response to the transmitted identifier; and
creating an event entry in a second event database at the portable electronic device responsive to the received event data.

14. The method of Claim 13, wherein transmitting an identifier associated with an event entry participant is preceded by establishing an association between the identifier and the event entry participant responsive to a user input at the portable electronic device.

15. The method of Claim 13, wherein the identifier comprises a device identifier and/or respective identifiers for respective ones of a plurality of event entry participants.

## Patentansprüche

1. Computerimplementiertes Verfahren zum Synchronisieren von Ereignisinformation für ein tragbares elektronisches Gerät, umfassend:
das Herstellen einer Verknüpfung zwischen einer Kennung und dem tragbaren elektronischen Gerät;
das Suchen ausschließlich nach Teilnehmerfeldern von Ereigniseinträgen in einer Ereignisdatenbank, die entsprechende Ereigniseinträge für entsprechende Ereignisse enthält, um einen Ereigniseintrag zu erkennen, der einen Teilnehmerfeldwert hat, der der Kennung entspricht, die dem tragbaren elektronischen Gerät zugeordnet ist; und
das elektronische Übermitteln von Daten des erkannten Ereigniseintrags an das tragbare elektronische Gerät.

2. Verfahren nach Anspruch 1, worin der Teilnehmerfeldwert einen Wert eines Attendeefelds und/oder eines Organizerfelds und/oder einen einheitlichen Quellenlokalisierer (URL) umfasst.

3. Verfahren nach Anspruch 1, worin das Herstellen einer Verknüpfung zwischen einer Kennung und dem tragbaren elektronischen Gerät das Empfangen der Kennung von dem tragbaren elektronischen Gerät über eine Kommunikationsverbindung umfasst.

4. Verfahren nach Anspruch 1, worin die dem tragbaren elektronischen Gerät zugeordnete Kennung eine Gerätekennung und/oder eine Ereigniseintrags-Teilnehmerkennung umfasst, die von dem tragbaren elektronischen Gerät empfangen wird.

5. Verfahren nach Anspruch 1, zudem umfassend das Erzeugen eines Ereigniseintrags in der Ereignisdatenbank des tragbaren elektronischen Geräts abhängig von den übermittelten Daten.

6. Verfahren nach Anspruch 1, worin dem Durchsuchen einer Ereignisdatenbank, die entsprechende Ereigniseinträge für entsprechende Ereignisse enthält, damit ein Ereigniseintrag erkannt wird, der einen Teilnehmerfeldwert aufweist, der der Kennung entspricht, die dem tragbaren elektronischen Gerät zugeordnet ist, das Herstellen einer Entsprechung zwischen der Kennung und einem Teilnehmerfeldwert vorausgeht.

7. Verfahren nach Anspruch 6, worin das Herstellen einer Entsprechung zwischen der Kennung und einem Teilnehmerfeldwert das Herstellen der Entsprechung zwischen der Kennung und einem Teilnehmerfeldwert als Reaktion auf eine Benutzereingabe an dem tragbaren elektronischen Gerät und/oder einer Benutzereingabe an einem zweiten elektronischen Gerät umfasst, das Zugriff auf die zweite Ereignisdatenbank gestattet.

8. Verfahren nach Anspruch 6, worin das Herstellen einer Entsprechung zwischen der Kennung und einem Teilnehmerfeldwert das Herstellen einer Entsprechung zwischen einer einzigen Kennung und mehreren Teilnehmerfeldwerten umfasst.

9. Verfahren nach Anspruch 1, worin:
dem elektronischen Übermitteln von Daten des erkannten Ereigniseintrags an das tragbare elektronische Gerät das Herstellen einer Kommunikationsverbindung zwischen dem tragbaren elektronischen Gerät und einem zweiten elektronischen Gerät vorausgeht; und
das elektronische Übermitteln von Daten des erkannten Ereigniseintrags an das tragbare elektronische Gerät das elektronische Übermitteln von Daten des erkannten Ereigniseintrags von dem zweiten elektronischen Gerät an das tragbare elektronische Gerät über die Kommunikationsverbindung umfasst.

10. Verfahren nach Anspruch 1, worin das tragbare elektronische Gerät ein mobiles Endgerät, ein Medienwiedergabegerät und/oder einen persönlichen digitalen Assistenten umfasst.

11. Computer, der dafür konfiguriert ist, das Verfahren nach Anspruch 1 auszuführen.

12. Computerprogrammprodukt zum Synchronisieren von Ereignisinformation für ein tragbares elektronisches Gerät, wobei das Computerprogrammprodukt Computerprogrammcode enthält, der in einem computerlesbaren Medium verkörpert ist, und der Computerprogrammcode Programmcode umfasst, der dafür konfiguriert ist, das Verfahren nach Anspruch 1 auszuführen.

13. Verfahren zum Betreiben eines tragbaren elektronischen Geräts, umfassend:
das Übermitteln einer Kennung, die dem tragbaren elektronischen Gerät zugeordnet ist, an ein zweites elektronisches Gerät, das Zugriff auf eine erste Ereignisdatenbank bietet, die entsprechende Ereigniseinträge für entsprechende Ereignisse umfasst, wobei die Kennung ausschließlich für den Vergleich mit Teilnehmerfeldwerten konfiguriert ist, die in Ereigniseinträgen in der ersten Ereignisdatenbank enthalten sind;
das Empfangen von Ereignisdaten, die das zweite elektronische Gerät als Reaktion auf die übertragene Kennung übermittelt; und
das Erzeugen eines Ereigniseintrags in einer zweiten Ereignisdatenbank in dem tragbaren elektronischen Gerät als Reaktion auf die empfangenen Ereignisdaten.

14. Verfahren nach Anspruch 13, worin dem Übermitteln einer Kennung, die einem Ereigniseintrags-Teilnehmer zugeordnet ist, das Herstellen einer Verknüpfung zwischen der Kennung und dem Ereigniseintrags-Teilnehmer als Reaktion auf eine Benutzereingabe an dem tragbaren elektronischen Gerät vorausgeht.

15. Verfahren nach Anspruch 13, wobei die Kennung eine Gerätekennung und/oder entsprechende Kennungen für entsprechende Teilnehmer einer Anzahl Ereigniseintrags-Teilnehmer umfasst.

## Revendications

1. Procédé réalisé par ordinateur de synchronisation d'informations d'évènements pour un dispositif électronique portable, le procédé comprenant:
établir une association entre un identifiant et le dispositif électronique portable;
rechercher seulement des champs participants d'entrées d'évènements dans une base de données d'évènements qui comprend des entrées d'évènements respectifs pour des évènements respectifs pour identifier une entrée d'évènement ayant une valeur de champ participant correspondant à l'identifiant associé au dispositif électronique portable; et
transmettre électroniquement des données de l'entrée d'évènement identifié au dispositif électronique portable.

2. Procédé selon la revendication 1, dans lequel la valeur de champ participant comprend une valeur d'un champ de personnes présentes et/ou d'un champ organiseur et/ou d'un localiseur de ressources uniformes (URL).

3. Procédé selon la revendication 1, dans lequel l'établissement d'une association entre un identifiant et le dispositif électronique portable comprend la réception de l'identifiant du dispositif électronique portable par une liaison de communication.

4. Procédé selon la revendication 1, dans lequel l'identifiant associé au dispositif électronique portable comprend un identifiant de dispositif et/ou un identifiant participant d'entrée d'évènements reçu du dispositif électronique portable.

5. Procédé selon la revendication 1, comprenant en outre la création d'une entrée d'évènement dans la base de données d'évènements du dispositif électronique portable en réponse aux données transmises.

6. Procédé selon la revendication 1, dans lequel la recherche d'une base de données d'évènements comprenant des entrées d'évènements respectifs pour des évènements respectifs pour identifier une entrée d'évènement ayant une valeur de champ participant correspondant à l'identifiant associé au dispositif électronique portable est précédée de l'établissement d'une correspondance entre l'identifiant et une valeur de champ participant.

7. Procédé selon la revendication 6, dans lequel l'établissement d'une correspondance entre l'identifiant et une valeur de champ participant comprend l'établissement de la correspondance entre l'identifiant et une valeur de champ participant réagissant à une entrée utilisateur au dispositif électronique portable et/ou une entrée utilisateur à un deuxième dispositif électronique qui fournit l'accès à la deuxième base de données d'évènements.

8. Procédé selon la revendication 6, dans lequel l'établissement d'une correspondance entre l'identifiant et une valeur de champ participant comprend l'établissement d'une correspondance entre un seul identifiant et plusieurs valeurs de champ participant.

9. Procédé selon la revendication 1, dans lequel la transmission électronique de données de l'entrée d'évènement identifié au dispositif électronique portable est précédée de l'établissement d'une liaison de communication entre le dispositif électronique portable et un deuxième dispositif électronique; et
dans lequel la transmission électronique de données de l'entrée d'évènement identifié au dispositif électronique portable comprend la transmission électronique de données de l'entrée d'évènement identifié du deuxième dispositif électronique au dispositif électronique portable par la liaison de communication.

10. Procédé selon la revendication 1, dans lequel le dispositif électronique portable comprend un terminal mobile, un lecteur multi-média et/ou un assistant numérique personnel.

11. Ordinateur configuré pour exécuter le procédé de la revendication 1.

12. Produit de programme informatique pour synchroniser l'information d'évènements d'un dispositif électronique portable, le produit de programme informatique comprenant un code de programme informatique incorporé dans un support lisible par ordinateur, le code du programme informatique comprenant un code programme configuré pour exécuter le procédé de la revendication 1.

13. Procédé de fonctionnement d'un dispositif électronique portable, le procédé comprenant:
transmettre un identifiant associé au dispositif électronique portable à un deuxième dispositif électronique qui fournit l'accès à une première base de données d'évènements qui comprend des entrées d'évènements respectifs pour des évènements respectifs, l'identifiant étant configuré pour une comparaison seulement de valeurs de champ participant incluses dans les entrées d'évènements dans la première base de données d'évènements;
recevoir des données d'évènements transmises du deuxième dispositif électronique en réponse à l'identifiant transmis; et
créer une entrée d'évènements dans une deuxième base de données d'évènements au dispositif électronique portable en réponse aux données d'évènements reçus.

14. Procédé selon la revendication 13, dans lequel la transmission d'un identifiant associée à un participant d'entrée d'évènements est précédée de l'établissement d'une association entre l'identifiant et le participant d'entrée d'évènements réagissant à une entrée par l'utilisateur au dispositif électronique portable.

15. Procédé selon la revendication 13, dans lequel l'identifiant comprend un identifiant de dispositif et/ou des identifiants respectifs pour des participants respectifs d'une pluralité de participants d'entrée d'évènements.
